(19) Europäisches Patentamt
European Patent Office
Office européen des brevets

(11) **EP 1 739 316 A2**

(12) **EUROPÄISCHE PATENTANMELDUNG**

(43) Veröffentlichungstag:
**03.01.2007 Patentblatt 2007/01**

(51) Int Cl.:
*F16C 19/06* (2006.01)     *F16C 33/76* (2006.01)

(21) Anmeldenummer: **06009402.6**

(22) Anmeldetag: **06.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **28.06.2005 DE 102005029936**

(71) Anmelder: **Schaeffler KG**
**91074 Herzogenaurach (DE)**

(72) Erfinder:
• **Gietl, Thomas**
**91257 Pegnitz (DE)**
• **Peschke, Harald**
**90587 Veitsbronn (DE)**
• **Bohr, Andreas**
**91074 Herzogenaurach (DE)**
• **Goppelt, Georg**
**91738 Pfofeld (DE)**

(54) **Abgedichtetes Wälzlager**

(57) Die Erfindung bezieht sich auf ein Wälzlager (1), das durch eine Dichtscheibe (6) abgedichtet ist, das eine schleifende Dichtung und zwei Spaltdichtungen bildet. Durch eine in axialer Richtung voneinander beabstandete Lage von einem Drehpunkt (A) und einem Masseschwerpunkt (S) eines elastischen Trägerteils (14), dass die schleifende Dichtung (15) trägt, wird diese bei sich erhöhende Drehzahl durch die Fliehkraft mit einer nach außen wirkenden axialen Kraft beaufschlagt, so dass die schleifende Dichtlippe 15 mit wachsender Drehzahl mit einer geringeren Kraft anliegt.

**Fig. 1**

Printed by Jouve, 75001 PARIS (FR)

## Beschreibung

## Anwendungsgebiet der Erfindung

Die Erfindung betrifft ein Wälzlager, insbesondere Rillenkugellager, mit einer zwischen einem Lagerinnenring und einem Lageraußenring eingebauten, aus einer Armierung und einem elastischen Dichtwerkstoff bestehenden Dichtscheibe, die in einer umlaufenden Ringnut eines der beiden Lagerringe angeordnet ist, wobei die Dichtscheibe an ihrem anderem Ende ein elastisches Trägerteil aufweist, von dem zwei Dichtlippen ausgehen, die mit einem im anderen Lagerring angeordneten Freistich zusammenwirken, wobei der Freistich unsymmetrisch derart gestaltet ist, dass eine an den Laufbahnbereich sich anschließende erste Schulter und eine außenliegende zweite Schulter gebildet sind, die sich in ihrem Durchmesser unterscheiden, wobei an einer inneren Wandung des Freistiches die axial nach innen gerichtete erste Dichtlippe schleifend anliegt und die zweite axial nach außen gerichtete Dichtlippe mit der außen liegenden Schulter eine erste Spaltdichtung bildet und dass radial beabstandet von den ersten beiden Dichtlippen eine dritte nach innen gerichtete Dichtlippe angeordnet ist, die mit der ersten Schulter eine zweite Spaltdichtung bildet.

## Hintergrund der Erfindung

Ein solches Dichtungskonzept für ein Wälzlager ist bereits aus der JP 2003-227521 A1 vorbekannt. In den Figuren 1 und 2 dieser Vorveröffentlichung ist ein Rillenkugellager gezeigt, in dessen Außenring in einer umlaufenden Ringnut eine Dichtscheibe eingesetzt ist. Diese Dichtscheibe besteht aus einer metallischen Armierung, die mit einem elastischen Dichtwerkstoff umspritzt ist. Am vom Außenring abgewandten Ende weist diese Dichtscheibe ein elastisches Trägerteil auf, von dem zwei Dichtlippen abzweigen. Darüber hinaus ist die Dichtscheibe mit einer weiteren dritten Dichtlippe versehen, wobei alle drei Dichtlippen mit einem im Innenring angeordneten Freistich zusammenwirken. Der Freistich im Innenring ist unsymmetrisch ausgebildet, so dass der Innenring zwei Schultern mit unterschiedlichem Durchmesser aufweist. Zum einen eine erste Schulter, die sich unmittelbar an den Laufbahnbereich anschließt und zum anderen eine zweite Schulter, die den Innenring an seinem axialen Ende begrenzt und einen Durchmesser aufweist, der kleiner als der Durchmesser der ersten Schulter ist. Die drei Dichtlippen wirken mit dem Freistich derart zusammen, dass eine schleifende Dichtung und zwei Spaltdichtungen realisiert sind. Die schleifende Dichtung wird durch die erste Dichtlippe gebildet, die an einer Wandung des Einstiches anliegt. Die erste Spaltdichtung wird durch die zweite, axial nach außen gerichtete Dichtlippe gebildet, die die am Lagerinnenring außen liegende Schulter mit Abstand überdeckt. Schließlich ist die zweite Spaltdichtung durch die dritte radial nach innen weisende Dichtlippe gebildet, welche die erste, an den Laufbahnbereich sich anschließende Schulter des Lagerinnenringes mit Abstand überdeckt.

An diesem Dichtungskonzept ist insbesondere von Nachteil dass im nichteingebauten Zustand das Trägerteil mit den ersten beiden Dichtlippen nach innen geneigt ist, wobei die Neigung gegen eine rechtwinkelig zur Drehachse verlaufende Ebene gemessen ist. Durch diese Neigung ist sichergestellt, dass die erste Dichtlippe im eingebauten Zustand mit Vorspannung an der Seitenwand des Einstiches im Lagerinnenring anliegt. Dies hat zur Folge, dass mit zunehmender Drehzahl durch die ständig gleichgroße Anpresskraft der ersten Dichtlippe an die innere Wandung des Einstichs eine erhöhte Reibung erreicht wird, die mit einer unzulässig großen Reibungswärme einhergeht. Dies kann dazu führen, dass sich die Lagertemperatur in unzulässiger Weise erhöht, was zu einem Schmierstoffverlust führen kann, der sich unmittelbar auf die Standzeit des Wälzlagers auswirkt.

## Zusammenfassung der Erfindung

Ausgehend von den Nachteilen des bekannten Standes der Technik liegt der Erfindung daher die Aufgabe zugrunde, eine Abdichtung für ein Wälzlager zu schaffen, mit der eine drehzahlabhängige Vorspannung der schleifenden Dichtlippe erzielbar ist.

Erfindungsgemäß wird diese Aufgabe nach dem kennzeichnenden Teil von Anspruch 1 in Verbindung mit dessen Oberbegriff dadurch gelöst, dass das elastische Trägerteil im eingebauten Zustand zu einer rechtwinklig zu einer Drehachse verlaufenden Ebene in axialer Richtung nach innen geneigt ist, wobei ein Drehpunkt A und ein radial davon beabstandet angeordneter Masseschwerpunkt S des elastischen Trägerteils in axialer Richtung um einen Betrag a nach außen zueinander versetzt angeordnet sind, so dass bei Rotation des Wälzlagers eine im Masseschwerpunkt S angreifende Fliehkraft eine in axialer Richtung nach außen auf die erste schleifende Dichtlippe wirkende Kraftkomponente auslöst.

Die vorstehend beschriebene Ausgestaltung der Dichtscheibe ermöglicht somit eine fliehkraftgeregelte, vorgespannte Abstützung der ersten Dichtlippe an der Wandung des Freistichs. Durch die Neigung des Trägerteils nach innen und durch den axialen Versatz von Drehpunkt A und Masseschwerpunkt S sinkt die Anpresskraft zwischen erster Dichtlippe und Freistich mit der sich durch Rotation erhöhenden Fliehkraft. Dadurch wird auch bei hohen Drehzahlen durch die geringere Reibung das Lager nicht über Gebühr erwärmt, was sich positiv auf den Schmiermittelvorrat und somit positiv auf die gesamte Standzeit des Wälzlagers auswirkt. Die erste Dichtlippe ist biegeweich am elastischen Trägerteil angebunden und liegt unter leichter Vorspannung an, wobei die Biegesteifigkeit der Dichtlippe so ausgelegt ist, dass über den gesamten Drehzahlbereich des Lagers ein optimaler Dichtlippenkontakt gewährleistet ist.

Weitere vorteilhafte Ausgestaltungen der Erfindung sind in den Unteransprüchen 2 bis 6 beschrieben.

So ist nach Anspruch 2 vorgesehen, dass ein radialer Abstand I der ersten Dichtlippe vom Drehpunkt A und eine Dicke t des Trägerteils nachstehendes Verhältnis bilden:

$$3 \leq l/t \leq 6$$

Mit diesem Verhältnis von Länge des Hebelarms der ersten Dichtlippe zur Breite des Trägerteils ist die Steifigkeit des letztgenannten definiert, wobei mit wachsendem Verhältnis bei gleicher Drehzahl des Lagers die Dichtlippe stärker entlastet wird.

Aus Anspruch 3 geht hervor, dass der radiale Abstand I und der axiale Betrag a nachstehendes Verhältnis bilden:

$$10 < l/a < 150.$$

Durch dieses Verhältnis wird die gegenseitige Wirkung von Kontaktkraft und Fliehkraft in den jeweiligen Angriffspunkten gesteuert. Dies bedeutet, dass mit größer werdendem Verhältnis bei gleicher Lagerdrehzahl ein leichteres Abheben der schleifenden Dichtlippe von der Einstichkante erfolgt.

Nach einem weiteren Merkmal gemäß Anspruch 4 ist vorgesehen, dass ein axialer Abstand k zwischen dem Masseschwerpunkt S und dem Ende der zweiten Dichtlippe und ein axialer Abstand m zwischen dem Masseschwerpunkt S und dem Ende der ersten Dichtlippe nachstehendes Verhältnis bilden:

$$1 < k/m < 180$$

Mit einem steigenden Verhältnis wird bei gleicher Lagerdrehzahl der Einfluss der Fliehkraft erhöht, dass bedeutet, die schleifende Dichtlippe hebt eher ab. Die Gestaltung der Abdichtung ist mit Hilfe der vorstehend genannten Beziehungen so ausgelegt, dass selbst bei maximaler Drehzahl die als dynamische Dichtlippe wirkende erste schleifende Dichtlippe immer noch anliegt. Dies hat die bereits günstigen Eigenschaften bezüglich Temperaturentwicklung und Höhe der Reibkräfte an der Dichtlippe zur Folge, was in einem direkten Zusammenhang mit dem Verschleißverhalten steht.

Nach einem weiteren Merkmal der Erfindung gemäß Anspruch 5 ist vorgesehen, dass die scheibenartig ausgebildete Armierung der Dichtscheibe wenigstens einseitig vom elastischen Dichtwerkstoff umfasst ist und die Armierung an einem Ende einen abgewinkelten Bord und am anderen Ende einen in Richtung des Freistichs schräg geneigten Schenkel aufweist. Durch diese konstruktive Ausgestaltung der Dichtscheibe wird deren ausreichende Festigkeit bzw. Steifigkeit sichergestellt.

Schließlich ist nach einem letzten Merkmal der Erfindung gemäß Anspruch 6 vorgesehen, dass das erfindungsgemäß abgedichtete Wälzlager in einer Spannrolle oder einer Umlenkrolle eines Spannsystems eingesetzt ist, mit dem ein Zugmittel eines Zugmitteltriebes vorgespannt ist. Derartige Rollen sind sehr hohen Belastungen ausgesetzt, insbesondere bei watfähigen Fahrzeugen ist eine einwandfreie Funktion der Abdichtung auch unter schwierigsten Bedingungen erforderlich.

Die Erfindung wird an nachstehendem Ausführungsbeispiel näher erläutert.

**Kurze Beschreibung der Zeichnungen**

Es zeigen:

Figur 1      einen teilweisen Längsschnitt durch ein Rillenkugellager mit erfindungsgemäßer Abdichtung,

Figur 2      eine vergrößerte Seitenansicht auf ein elastisches Trägerteil und

Figur 3      eine graphische Darstellung von Eigenschaften der schleifenden Dichtlippe in Abhängigkeit von der Drehzahl.

**Ausführliche Beschreibung der Zeichnungen**

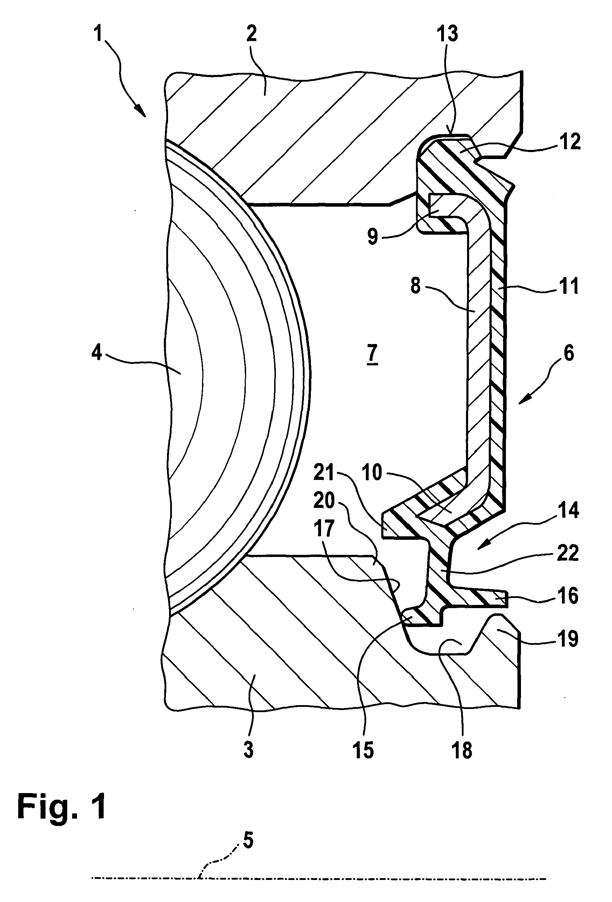

In Figur 1 ist ein als Rillenkugellager ausgebildetes Wälzlager 1 gezeigt, zwischen dessen Lageraußenring 2 und dessen Lagerinnenring 1 auf nicht näher bezeichneten Laufbahnen als Kugeln ausgebildete Wälzkörper 4 abrollen, die in einem nicht dargestellten Käfig geführt sind. Der die Wälzkörper 4 aufnehmende, zwischen den beiden Lagerringen 2 und 3 liegende Raum 7 ist nach außen durch die Dichtscheibe 6 abgedichtet. Diese besteht aus der Armierung 8, welche am oberen Ende den radial nach innen abgewinkelten Bord 9 und am unteren Ende den schräg in Richtung des Freistiches 18 geneigten Schenkel 10 aufweist und dem elastischen Dichtwerkstoff 11. Am oberen Ende weist der Dichtwerkstoff 11 die Verdickung 12 auf, mit der die Dichtscheibe 6 im Lageraußenring 2 in der umlaufenden Ringnut 13 form- und/oder kraftschlüssig eingesetzt ist. Das bedeutet, dass im vorliegenden Ausführungsbeispiel der Lageraußenring 2 um die Lagerachse 5 rotiert, während der Lagerinnenring 3 feststehend angeordnet ist. Dieser Fall ist dann gegeben, wenn der Lageraußenring 2 des Wälzlagers. 1 mit einer nicht dargestellten Riemenscheibe versehen ist, die die Lauffläche für einen Riemen eines Zugmitteltriebes bildet.

Am unteren Ende weist die Riemenscheibe 6 ein elastisches Trägerteil 14 auf, von dem zwei Dichtlippen 15, 16 abzweigen. Zum einen die schleifende Dichtlippe 15, die an einer Wandung 17 des Freistiches 18 anliegt. Und zum anderen die zweite Dichtlippe 16, die mit der zweiten Schulter 19 eine erste Spaltdichtung bildet. Der Freistich 18 ist im Lagerinnenring 3 so ausgelegt, dass die linksseitig angeordnete, an die Laufbahn der Wälzkörper 4 sich anschließende erste Schulter 20 einen größeren Durchmesser als die zweite Schulter 19 hat. Oberhalb der Dichtlippen 15, 16 ist eine dritte Dichtlippe 21 vorhanden, die in radialer Richtung nach innen gerichtet ist und mit der ersten Schulter 20 eine zweite Spaltdichtung bildet. Die dritte Dichtlippe 21 ist im Sinne der Erfindung nicht mehr dem elastischen Trägerteil 14 zuzuordnen. Wie Figur 1 weiter zeigt, ist das Wälzlager 1 durch die Dichtscheibe 6 mit ihren insgesamt drei Dichtungen sehr gut geschützt. Die zweite Spaltdichtung zwischen der ersten Schulter 20 und der dritten Dichtlippe 21 sorgt insbesondere dafür, dass von den Wälzkörpern 4 abgeschleudertes Fett wieder zurückgeleitet wird. Die erste Spaltdichtung, die von der zweiten Dichtlippe 16 und der zweiten Schulter 19 gebildet ist, sorgt dafür, dass von außen eindringende Feuchtigkeit bzw. eindringender Schmutz nur in sehr geringem Maße bis zur schleifenden Dichtung gelangen kann, die von der ersten Dichtlippe 15 und der Wandung 17 des Freistiches 18 gebildet ist.

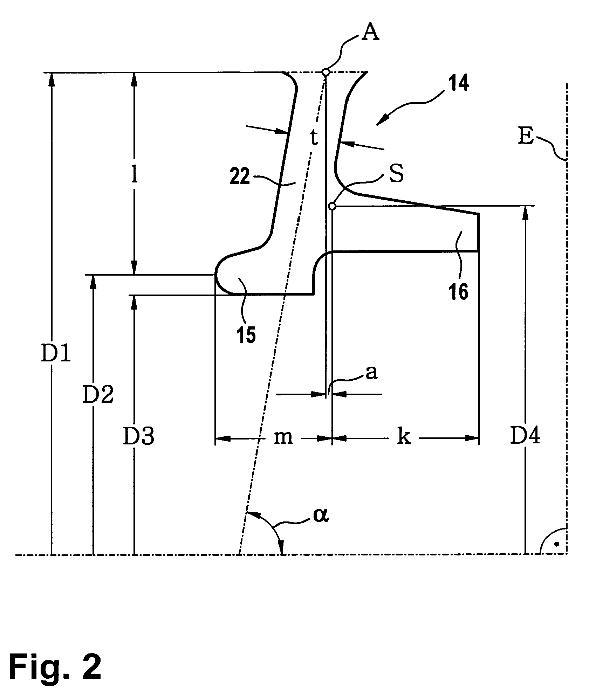

Nachstehend wird die Wirkungsweise der erfindungsgemäßen Dichtung erläutert, wobei insbesondere auf Figur 2 zur Klarstellung der verwendeten Begriffe verwiesen ist.

Als elastischer Trägerteil 14 der Dichtscheibe 6 ist der Teil zu verstehen, der in radialer Richtung unterhalb der dritten Dichtlippe 21 angeordnet ist. Der elastische Trägerteil 14 besteht aus dem Fuß 22, der gegenüber einer Ebene E, die senkrecht zur Drehachse 5 angeordnet ist, in axialer Richtung nach innen um den Winkel $\alpha$ geneigt angeordnet ist. Linksseitig schließt sich die erste schleifende Dichtlippe 15 am unteren Ende des Fußes 22 an, während rechtsseitig, etwas in radialer Richtung nach oben versetzt, die radial nach außen weisende zweite Dichtlippe 16 angeformt ist.

Mit A ist die Lage des Drehpunkts des elastischen Trägerteils 14 bezeichnet, der bei Rotation des Lageraußenringes 2 entsteht. Mit S ist die Lage des Masseschwerpunkts gemeint, der vom elastischen Trägerteil 14 gebildet ist. Mit dem Durchmesser D1 ist der Durchmesser des Trägerteils 14 gemeint, wobei Bezugspunkt dessen Drehpunkt A ist. Mit D2 ist der Durchmesser des Berührungspunktes der ersten Dichtlippe 15 gemeint, die an der inneren Wandung 17 des Freistiches 18 anliegt. D3 benennt den inneren Durchmessers der ersten Dichtlippe 15, während mit D4 die Lage des Durchmessers des Masseschwerpunktes S gemeint ist. Mit I ist der radiale Abstand zwischen Drehpunkt A des elastischen Trägerteils 14 und dem Anlagepunkt der Dichtlippe 15 gemeint. t definiert die Dicke des elastischen Trägerteils 14, genau genommen die Dicke von dessen Fuß 22. Der axialer Abschnitt zwischen dem Drehpunkt A und dem Masseschwerpunkt S des Trägerteils 14 ist durch den Betrag a gekennzeichnet. Schließlich sind mit m und mit k die axiale Länge der Dichtlippe 15 bzw. der Dichtlippe 16 gemeint, wobei der Bezugspunkt jeweils der Masseschwerpunkt S des Trägerteils 14 ist.

Wie aus den Figuren 1 und 2 ersichtlich, befindet sich der Masseschwerpunkt S des elastischen Trägerteils 14 in radialer Richtung beabstandet von dessen Drehpunkt A und in axialer Richtung nach außen um den Betrag a versetzt. Dieser Abstand a vergrößert sich in der Einbaulage und ist direkt abhängig vom Winkel $\alpha$, den das Trägerteil 14 nach Montage zur Drehachse 5 einnimmt. Durch die im Einbauzustand veränderte Lage des Massenschwerpunktes S gegenüber dem Drehpunkt A wird die Höhe der Anpresskraft der schleifenden Dichtlippe 15 an die Wandung 17 unter Fliehkrafteinfluss gesteuert. Mit zunehmender Drehzahl des Wälzlagers 1, d. h., mit rotierendem Lageraußenring 2 und damit verbundener Dichtscheibe 6 wirkt eine von der Zentrifugalkraft ausgelöste Kraftkomponente in axialer Richtung nach außen, die die Anpresskraft der ersten Dichtlippe 15 nach und nach verringert. Dadurch ist sichergestellt, dass mit zunehmender Drehzahl die Anpresskraft auf die schleifende erste Dichtlippe 15 abnimmt, so dass deren Reibung verringert ist, was die bereits beschriebenen Vorteile für diese Lagerung bewirkt. Die erste schleifende Dichtlippe 15 wird demnach dynamisch durch den Fliehkrafteinfluß gesteuert, wobei die Dichtung so gestaltet ist, dass selbst bei maximaler Drehzahl die Dichtlippe 15 noch anliegt, aber mit einer geringen Anpresskraft.

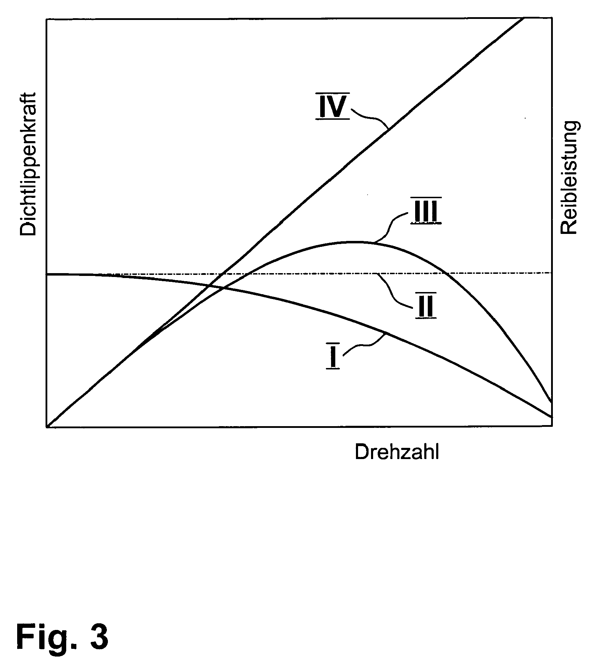

In Figur 3 sind die Verhältnisse graphisch dargestellt, wie sich die Dichtlippen Kraft bzw. die Reibung verhält, wenn bei dem in Figur 1 dargestellten Wälzlager 1 mit im Lageraußenring 2 angeordneter Dichtscheibe entweder der Lageraußenring 2 oder der Lagerinnenring 3 rotiert. In der mit I bezeichneten Kurve ist die auf die Dichtlippe 15 wirkende Kraft gezeigt, wenn der Lageraußenring 2 rotiert. Es ist erkennbar, dass diese Kraft mit sich erhöhender Drehzahl abnimmt, da durch die Fliehkraft eine in axialer Richtung wirkende Kraft auf die Dichtlippe 15 einwirkt. Die Kurve II zeigt dieselbe Kraft, die auf die Dichtlippe 15 wirkt, wenn der Lagerinnenring 3 rotiert. Es ist erkennbar, dass in diesem Fall die Kraft gleich bleibt, weil kein Fliehkrafteinfluß vorhanden ist. In der Kurve III ist die Reibleistung der Dichtung gezeigt, wenn sich der Lageraußenring 2 dreht. Es ist erkennbar, dass mit steigender Drehzahl zunächst die Reibleistung ansteigt, dann aber wieder abfällt, weil die die Dichtlippe 15 in axialer Richtung nach außen abhebende Kraft mit der Drehung zunimmt. Die mit IV bezeichnete Kurve zeigt schließlich, dass bei einem sich drehenden Lagerinnenring 3 mit steigender Drehzahl auch die Reibleistung zunimmt.

**Bezugszeichen**

| | | |
|---|---|---|
| 1 | Wälzlager | |
| 2 | Lageraußenring | |
| 3 | Lagerinnenring | |
| 4 | Wälzkörper | |
| 5 | Drehachse | |
| 6 | Dichtscheibe | |
| 7 | Raum | |
| 8 | Armierung | |
| 9 | Bord | |
| 10 | Schenkel | |
| 11 | Dichtwerkstoff | |
| 12 | Verdickung | |
| 13 | Ringnut | |
| 14 | elastisches Trägerteil | |
| 15 | erste Dichtlippe | |
| 16 | zweite Dichtlippe | |
| 17 | Wandung | |
| 18 | Freistich | |
| 19 | zweite Schulter | |
| 20 | erste Schulter | |
| 21 | dritte Dichtlippe | |
| 22 | Fuß | |
| A | Lage des Drehpunktes des Trägerteils 14 | |
| S | Lage des Masseschwerpunkts des Trägerteils 14 | |
| D1 | Durchmesser des Trägerteils 14 | |
| D2 | Durchmesser des Berührungspunktes der Dichtlippe 15 | |
| D3 | Innendurchmesser der Dichtlippe 15 | |
| D4 | Lage des Außendurchmessers des Schwerpunktes S | |
| I | radialer Abstand zwischen Drehpunkt A und Anlagepunkt Dichtlippe 15 | |
| t | Dicke des Trägerteils 14 | |
| a | axialer Abstand zwischen Drehpunkt A des Trägerteils 14 und dessen Masseschwerpunkt S | |
| m | axiale Länge der Dichtlippe 15 bezogen auf den Masseschwerpunkt S | |
| k | axiale Länge der Dichtlippe 17 bezogen auf den Masseschwerpunkt S | |
| Kurve I | Dichtlippenkraft bei rotierendem Lageraußenring 2 | |
| Kurve II | Dichtlippenkraft bei rotierendem Lagerinnenring 3 | |
| Kurve III | Reibleistung bei rotierendem Lageraußenring 2 | |
| Kurve IV | Reibleistung bei rotierendem Lagerinnenring 3 | |
| E | Ebene | |

**Patentansprüche**

1. Wälzlager (1), insbesondere Rillenkugellager, mit einer zwischen einem Lagerinnenring (3) und einem Lageraußenring (2) eingebauten, aus einer Armierung (8) und einem elastischen Dichtwerkstoff (11) bestehenden Dichtscheibe (6), die in einer umlaufenden Ringnut (13) eines der beiden Lagerringe (2, 3) angeordnet ist, wobei die Dichtscheibe (6) an ihrem anderen Ende ein elastisches Trägerteil (14) aufweist, von dem zwei Dichtlippen (15, 16) ausgehen, die mit einem im anderen Lagerring (3) angeordneten Freistich (18) zusammenwirken, wobei der Freistich (18) unsymmetrisch derart gestaltet ist, dass eine an den Laufbahnbereich sich anschließende erste Schulter (20) und eine außenliegende zweite Schulter (19) gebildet sind, die sich in ihrem Durchmesser unterscheiden, wobei an einer inneren Wandung (17) des Freistiches (18) die axial nach innen gerichtete erste Dichtlippe (15) schleifend anliegt und die zweite axial nach außen gerichtete Dichtlippe (16) mit der außenliegenden Schulter (19) eine erste Spaltdichtung bildet und dass radial beabstandet von den ersten beiden Dichtlippen (15, 16) eine dritte nach innen gerichtete Dichtlippe (21) angeordnet ist, die mit der ersten Schulter (20) eine zweite Spaltdichtung bildet, **dadurch gekennzeichnet, dass** das elastische Trägerteil (14) im eingebauten Zustand zu einer rechtwinklig zu einer Drehachse (5) verlaufenden Ebene (E) in axialer Richtung nach innen geneigt ist, wobei ein Drehpunkt (A) und ein radial davon beabstandet angeordneter Masseschwerpunkt (S) des elastischen Trägerteils (14) in axialer Richtung um einen Betrag (a) nach außen zueinander versetzt angeordnet sind, so dass bei Rotation des Wälzlagers (1) eine im Masseschwerpunkt (S) angreifende Fliehkraft eine in axialer Richtung nach außen auf die erste schleifende Dichtlippe (15) wirkende Kraftkomponente auslöst.

2. Wälzlager (1) nach Anspruch 1, **dadurch gekennzeichnet, dass** ein radialer Abstand (I) der ersten Dichtlippe (15) vom Drehpunkt (A) und eine Dicke (t) des Trägerteils (14) nachstehendes Verhältnis bilden:

$$3 \leq I/t \leq 6$$

3. Wälzlager (1) nach Anspruch 1, **dadurch gekennzeichnet, dass** der radiale Abstand (I) und der axiale Betrag (a) nachstehendes Verhältnis bilden:

$$10 < I/a < 150.$$

4. Wälzlager (1) nach Anspruch 1, **dadurch gekennzeichnet, dass** ein axialer Abstand (k) zwischen dem Masseschwerpunkt (S) und dem Ende der der zweiten Dichtlippe (16) und ein axialer Abstand (m) zwischen dem Masseschwerpunkt (S) und dem Ende der ersten Dichtlippe (15) nachstehendes Verhältnis bilden:

$$1 < k/m < 180$$

5. Wälzlager (1) nach Anspruch 1, **dadurch gekennzeichnet, dass** die scheibenartig ausgebildete Armierung (8) der Dichtscheibe (6) wenigstens einseitig vom elastischen Dichtwerkstoff (11) umfaßt ist und die Armierung (8) an einem Ende einen abgewinkelten Bord (9) und am anderen Ende einen in Richtung des Freistiches schräg geneigten Schenkel (10) aufweist.

6. Wälzlager (1) nach Anspruch 1, **dadurch gekennzeichnet, dass** es in einer Spannrolle oder einer Umlenkrolle eines Spannsystems eingesetzt ist, mit dem ein Zugmittel eines Zugmitteltriebs vorgespannt ist.

Fig. 1

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003227521 A